# EUROPEAN PATENT SPECIFICATION

(11) **EP 0 396 735 B1**
(45) Date of publication and mention of the grant of the patent: **20.10.1993**
(21) Application number: 90901102.5
(22) Date of filing: 11.09.1989
(51) Int. Cl.: B65H 55/04, F42B 15/04

(54) **HIGH DENSITY FILAMENT WINDING AND METHOD FOR PRODUCING IMPROVED CROSSOVERS AND INSIDE PAYOUT**
HOCHDICHTES GARNAUFSPULEN UND VERFAHREN ZUR HERSTELLUNG VERBESSERTER KREUZUNGSSTELLEN UND ZUM BESSEREN ABSPULEN
ENROULEMENT DE FILAMENT DE HAUTE DENSITE ET PROCEDE DE PRODUCTION DE CROISEMENTS ET DE DEROULEMENT INTERIEUR AMELIORES

(30) Priority: 28.10.1988 US 263804
(43) Date of publication of application: 14.11.1990
(73) Proprietor: Hughes Aircraft Company, Los Angeles, California 90045-0066 (US)
(72) Inventor: LECOMPTE, George, W., Tucson, AZ 85704 (US)
(74) Representative: Colgan, Stephen James
(86) International application number: US8903875
(87) International publication number: WO9004562

(56) References cited:
- EP-A- 300 628
- FR-A- 717 497
- GB-A- 2 003 450
- US-A- 1 504 005
- US-A- 2 734 695

## Description

The present invention relates generally to winding filaments, and, more particularly, to a winding of high packing density and a method of making.

### Description of Related Art

This invention is related to my pending application Deep Nested Filament Winding, Serial Nos. 270,885, filed Nov. 14, 1988, a continuation of 069,353, July 2, 1987, now abandoned.

There are situations in which it is desirable to be able to pay out a metal wire or optical fiber of considerable length for use as a data link. For example, many present day weapon systems include a launched missile with a wire or fiber optic data link wound on a bobbin or spool which pays out at a very high rate of speed during use.

Several criteria must be met in order to provide a satisfactory winding which can act as a missile data link. First of all, payout must be accomplished with a minimum of tension on the filament to prevent breakage, or in the case of an optical fiber even to prevent micro-bending which reduces signal transmission. Secondly, the winding should be stable so as to permit storage without collapsing from its wound configuration. Lastly, the winding should be dense and compact so as to take as little space as necessary.

Certain present day high speed filament dispensers have the filament in one layer nest between turns of adjacent layers. To maintain this condition, in certain known dispensers each layer is stepped back several turns from the underlying layer. This results in tapered ends for the winding which reduces volumetric efficiency.

A disadvantage especially found in cylindrical layered windings is the frictional drag on payout resulting from an outer layer being removed from an underlying layer. One way of reducing this problem is to provide a winding having an inside-out payout which not only provides exceptional volumetric efficiency but allows the winding to be stored without being subjected to undesirably high levels of tensile stress. This latter point is important especially for optical fiber cables which are subject to static fatigue and optical signal attenuation due to loads imposed by winding.

Known inside payout dispensers employ a "basket weave" winding technique which results in a substantial amount of empty space reducing volumetric efficiency. Moreover, the relatively large effective pitch of such a winding causes a correspondingly large modulation in instantaneous payout velocity reducing achievable vehicle speed for a given filament strength.

It is also desirable for windings, especially inside payout windings, to have squared ends. However, closely packed windings with squared ends are not easily wound, and in the past were not obtainable by high speed, automatic techniques.

The foregoing problems have been exacerbated by the problem of crossovers Crossovers heretofore have generally advanced a full pitch at each crossover region of a winding turn and/or have resulted in windings with irregular (i.e., non-squared) ends. See in this connection, Winding Long Slender Coils By The Orthocyclic Method by Halder W.C. Aamot, Special Report 128, U.S. Army Materiel Command, February 1969. Such uncontrolled cross-overs have required frequent manual "massage" to minimize winding disturbances, bulges, and other irregularities which may prevent successful winding and payout, and reduce volumetric efficiency.

EP-A-0300628 discloses a method of forming filament windings in which a spool having a central post with pitch control grooves receives a base layer of filament, the grooves maintaining the configuration of this base layer. Further layers of filament are wound by alternately reversing axial advancement of the filament layers.

US-A-2734695 shows a cable winding apparatus which comprises a drum with pairs of sets of parallel and helical grooves each set being in diametrically opposed relationship on the drum. The cable may thus be wound onto the drum in controlled layers.

According to the present invention, there is provided a method of forming a filament winding from a filament of a given diameter, comprising the steps of: providing a mandrel and at least one radially extending flange; wrapping the filament with outermost end turns contacting the flange to form a filament layer; and reversing such filament wrapping to form additional layers, each having an outermost turn contacting the flange, whereby a filament winding is formed; characterised by: winding a base wire to form a first layer onto the mandrel, said base wire having a diameter smaller than said given diameter; and winding the base wire onto the mandrel over the first layer forming a second guide layer with nested turns spaced apart; and in that said filament is wrapped over the second base wire layer nesting in the spaces between the turns of the guide layer.

In an alternative embodiment of the present invention, there is provided a method of forming a densely packed winding from a filament of given diameter, comprising the steps of: providing a mandrel with a radially extending flange; and wrapping a first layer of the filament and forming subsequent layers by reversing the direction of wrapping over the underlying layer, an outermost turn of each layer contacting the flange; characterised by: wrapping a base wire on the mandrel to form a first layer; wrapping a second layer over the first layer using first and second guide wires in side-by-side relation; and removing the second guide wire leaving a space between adjacent turns of the first guide wire; and in that the first layer of the filament nests in spaces between the first guide wire turns.

In a further aspect of the present invention, there is provided a mandrel assembly for use in forming a densely packed filament winding, comprising mandrel means and characterised by: a layer of base wire wound on the mandrel means with the turns in continuous lateral contact with adjacent turns; a guide wire layer overlying the base wire layer, each turn of said guide layer being spaced from adjacent turns, the spaces between the guide wires being for nesting receipt of a filament first layer; and means for securing the guide wire and base wire to the mandrel.

There is thus provided in accordance with the present invention a filament winding (e.g., wire, optical fiber) in which each layer has a plurality of turns nested between turns of the underlying layer, each turn crossing over underlying turns in at least two regions. Each crossing filament turn has an advance in a crossing region which substantially aligns with a crossover region in the underlying layer. The winding so produced enables achieving a winding having squared ends and enhanced volumetric efficiency.

These windings can be made by high-speed, automatic machine techniques. One especially advantageous use of windings described here made in the inside payout form, is to provide a data link from a launched missile to its launch site.

The winding method of the invention includes laying down a base wire layer on a mandrel over which a guide layer is formed, the guide layer turns being nested in the wire layer and spaced apart. The filament winding is formed by nesting in the interturn spaces of the guide layer.

An adhesive binder is applied to the filament as it is wound. After cure of the binder several sacrificial filament layers, which are laid down on the guide wire before the actual filament, are removed allowing the winding to be removed from the mandrel. In this manner, the baselayer can remain on the mandrel and may be used again.

The guide wire layer may be laid down by a bi-filar technique in which two wires of differing diameters (e.g., 0.152 (6) and 0.076 mm (3 mils) over a 0.127 mm (5 mil) wire base) are wound side-by-side and the larger wire removed leaving the desired gap to receive the filament.

### BRIEF DESCRIPTION OF THE DRAWINGS

FIG. 1A is a perspective view of a prior art winding, and FIG. 1B is a stylized illustration of uncontrolled crossovers appearing in prior art windings.

FIG. 2A is a perspective view of an inside payout filament winding; FIGS. 2B and 2C are a stylized depiction of a winding of the invention having improved crossovers and sectional view thereof; FIG. 2D is a stylized depiction of an alternative winding geometry.

FIG. 3 is a side elevational view of a mandrel and winding of the present invention.

FIG. 4 is a side elevational view of a mandrel with removable flanges.

FIGS. 5A and 5B are pictorial views of windings in accordance with the present invention.

FIGS. 6A and 6B are pictorial views showing windings with sacrificial layers removed.

### DETAILED DESCRIPTION OF THE INVENTION

As used herein, "pitch" means the axial advance of the winding associated with one turn.

As used herein, the term "filament" means optical fiber, but may also include more generally, wires, fibers, tubes, hoses and other items to be wound.

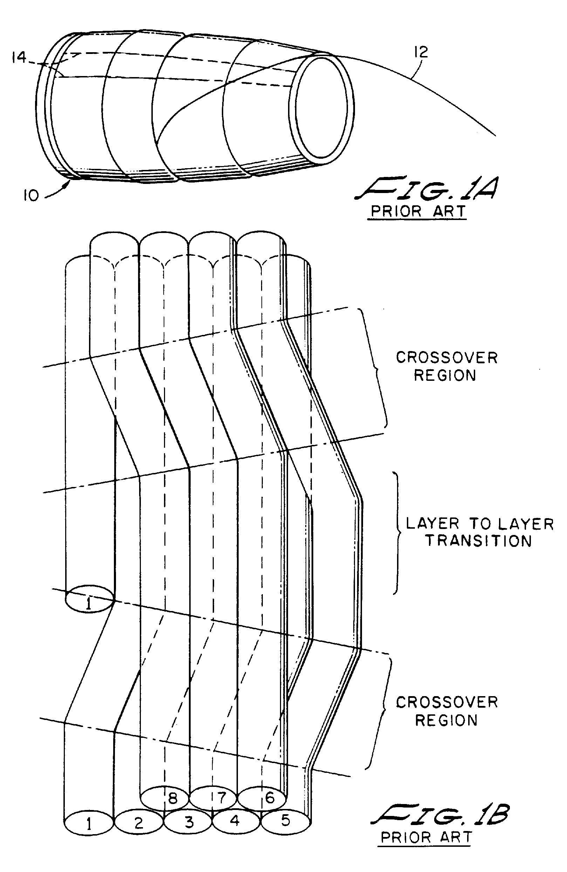

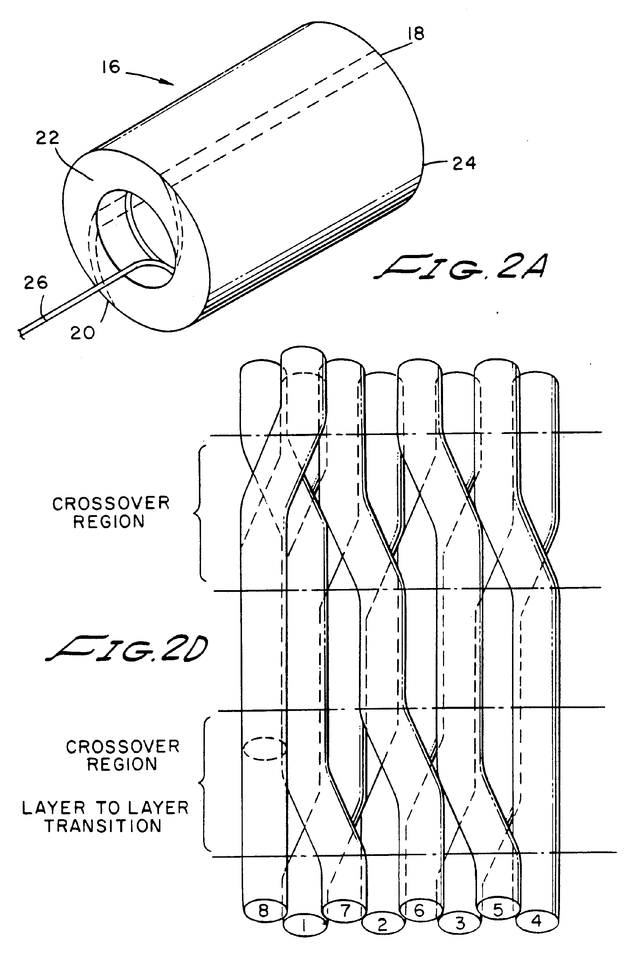

Turning now to the drawings and particularly FIG. 1A, a filament dispenser 10 of the prior art is shown having tapered construction in order to reduce drag on the filament 12 as it is removed from one end. A first deficiency is that the tapered construction is not volumetrically efficient. Also, since alternative layers are oppositely wound, there is the matter of maintaining regular cross-over geometry in order to achieve a precision filament winding. Dashed lines 14 define the area within which the crossovers typically occur on a winding spool.

Alternate winding layers have been wound as right-hand and lefthand helixes, which results in a filament crossing over an underlying filament twice each turn. In the past, precision filament winding was only achieved by interrupting winding to manually adjust (massage) crossovers or risk winding disturbances that result from uncontrolled crossover patterns. A typical crossover pattern obtained heretofore is shown in FIG. 1B. Not only can improper crossovers (e.g., stacked in one cr a few positions) interfere with winding, they can also prevent formation of squared ends which are desirable for inside payout applications.

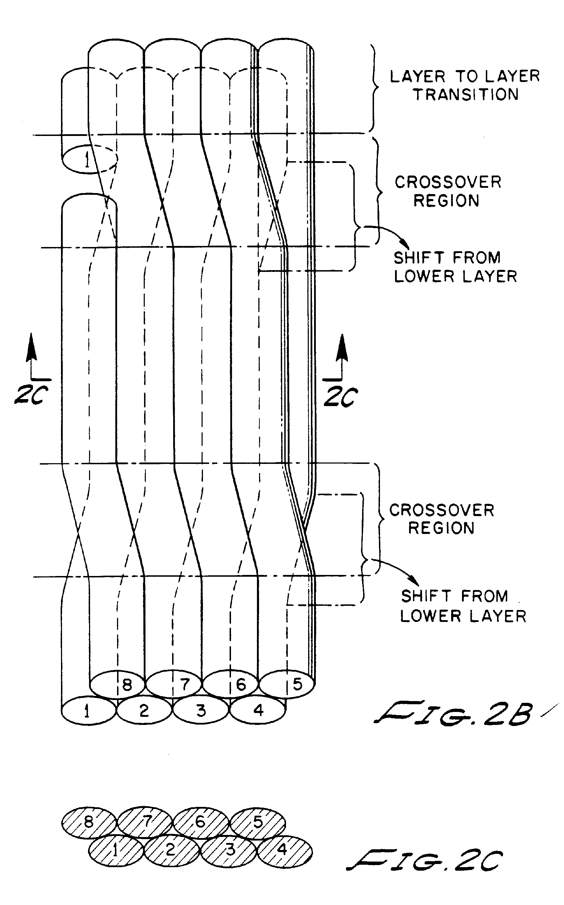

Reference is now made to FIGS. 2A-2C depicting filament windings according to this invention. FIG. 2A shows an inside payout winding 16 with two crossover regions 18 and 20 and having squared ends 22 and 24. The winding has an overall cylindrical shape and the filament 26 pulls off from the coil interior in what is termed inside payout. It is seen that the crossover region rotates or precesses about the winding which distributes potential crossover buildups in the crossover regions.

FIGS. 2B and 2C show the improved crossover arrangement in more detail and particularly as they occur in closely packed and deep nested versions, respectively.

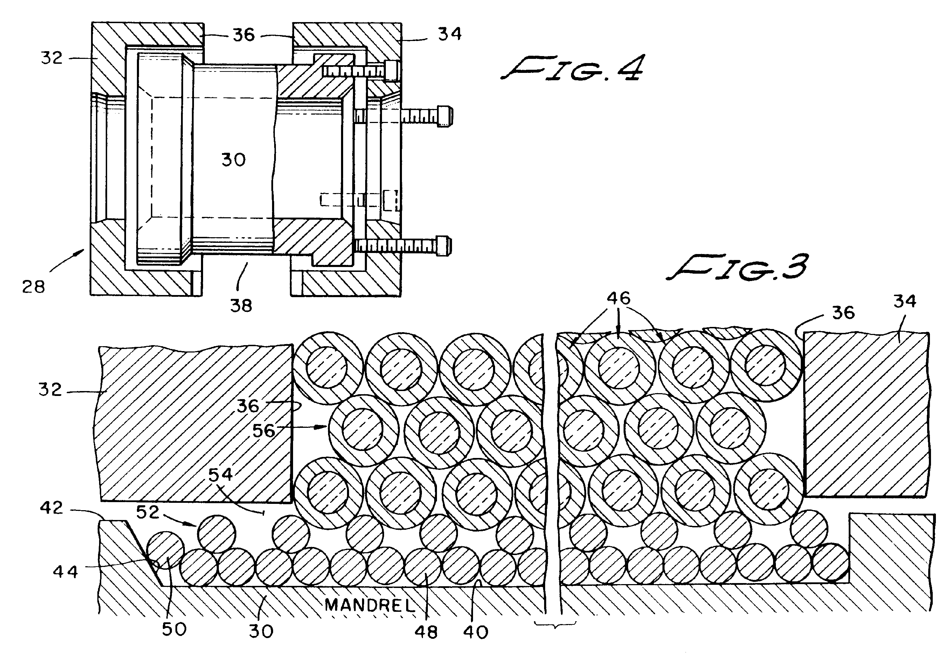

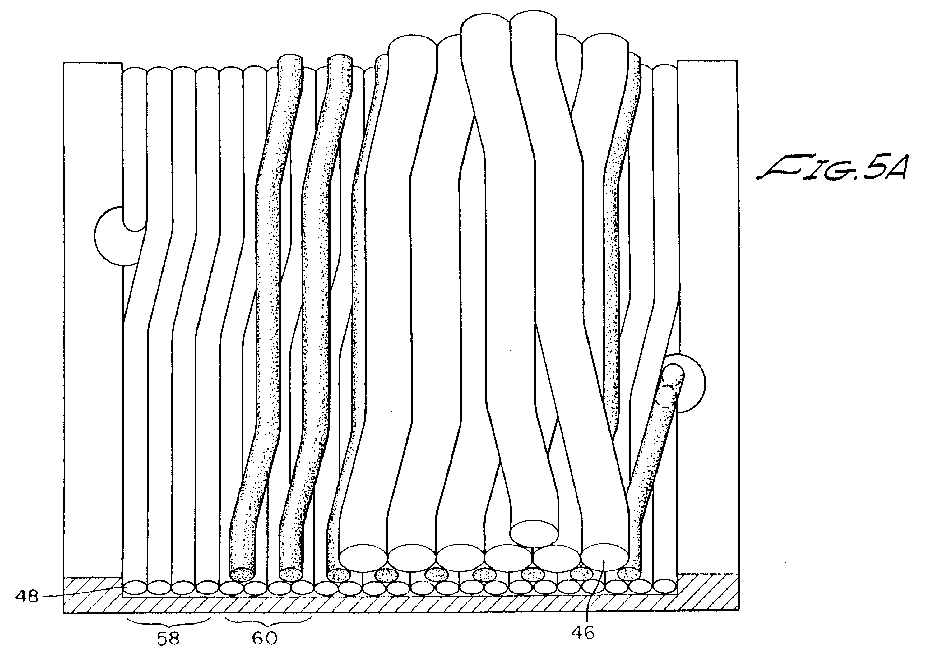

FIG. 4 depicts a winding form 28 especially advantageous in practicing this invention including a generally cylindrical mandrel 30 with two removable flanges 32 and 34 secured onto the two ends of the mandrel in a manner that permits axial position and tilt to be precisely adjusted to the required position relative to the pattern on the mandrel. Each flange has a flat face 36 which extends radially away from the mandrel circumferential surface. The winding space 38 defined by the circumferential mandrel surface and the two flange faces 36 will be either rectangular or square in cross-section depending upon the axial spacing of the flanges along the mandrel. A filament winding developed in space 38 and which squares off against faces 36 will possess the optimum volumetric efficiency, all other things equal.

For the ensuing details of a first embodiment of this invention reference is now made to FIG. 3. The mandrel 30 is seen to specifically include a first or major circumferential surface 40 of a first diameter, a second circumferential surface 42 of a second diameter greater than the first, the latter surface being located adjacent a mandrel end and extending for only a relatively short axial distance. A conical wall 44 joins the surfaces 40 and 42, the angle of juncture with 42 exceeding 90 degrees. It is assumed that a winding is to be made from an optical fiber 46. Before beginning the optical fiber winding and before locating the flanges 32 and 34 in place on the mandrel, one layer of a base wire 48 is helically wound onto the mandrel surface 40, substantially covering the surface with the last turn 50 raised slightly onto the conical wall or lip 44 which wedges the base wire layer firmly in place. This wedging is always below or underneath the subsequently wound guide layer and, therefore, does not interfere with the flanges. The base wire on completion of turn 50 continues to be wound back onto the base layer forming a guide layer 52 in which adjacent turns nest with the base layer so as to be spaced apart one wire width. The base wire ends are secured by conventional anchor, for example, (not shown) fixedly locating the base and guide layers to the mandrel. The flanges extend over the first few turns of the base and guide layers at each end which may produce some irregularity at the ends in the final winding. A slight space 54 exists between the flanges inner surface and the outermost part of the guide layer permitting ready mounting and removal of the flange without disturbing either the guide or base layers.

On the opposite side of the mandrel, the guide wires of layer 52 are displaced by one base wire diameter because of the half-pitch advance steps. This results in a half-winding pitch gap between the flange surface 36 and the optical fiber filament 46 in layer two 56. By this geometry each optical fiber layer ends with a half turn abutting against the flange surface 36, followed by a half turn, also abutting the flange, which is raised up to the next layer.

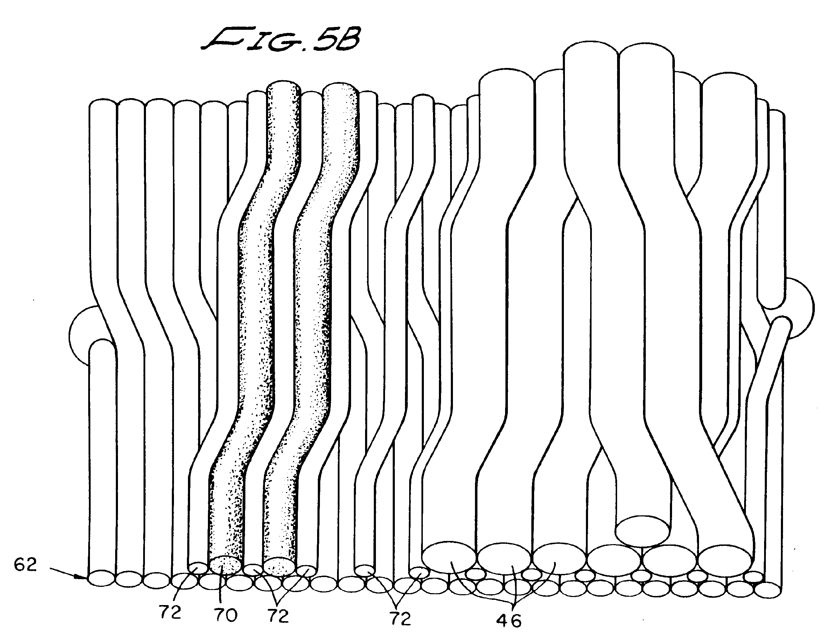

FIG. 5A is a pictorial view showing both plan and filament end views of a winding made in the manner described. For ease of understanding, a portion 58 of the base wire 48 layer is shown with no covering layers, and similarly several guide wires are left exposed and enumerated as 60.

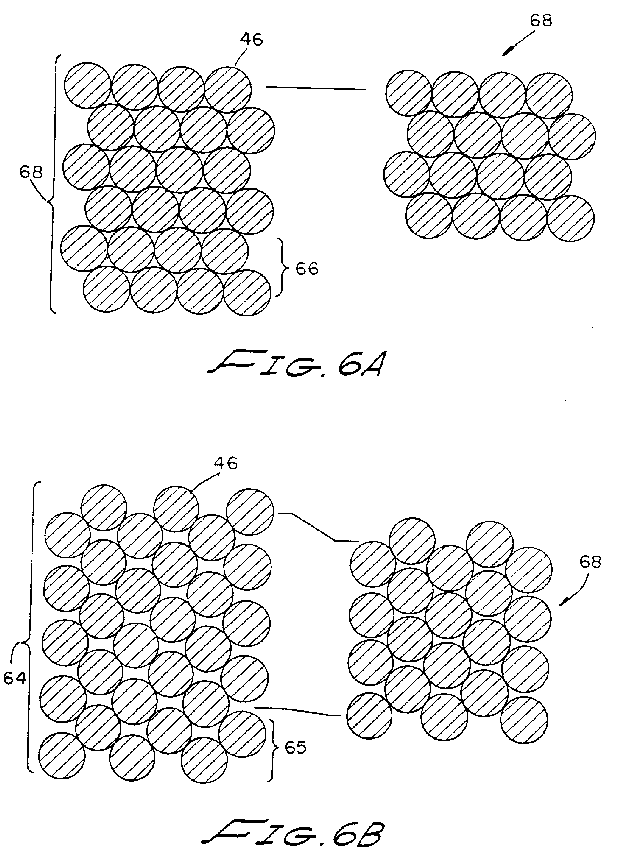

During development of the optical filament winding 64 on the mandrel (FIG. 3), an adhesive binder is applied to the filament which causes the winding to be maintained unitary. On completion of the winding, the flanges are removed and several of the innermost optical filament layers 66 are pulled out and destroyed which allows the winding proper to be taken off the mandrel (FIGS. 6A and 6B). The base wire and guide layers can remain on the mandrel and may be reused. Not only does removing the sacrificed layers 66 enhance winding removal from the mandrel, but also reduces filament tensile stresses that may have been produced during winding.

The resultant or final winding enumerated as 68 has squared off outer surfaces providing a substantially rectangular cross-section which is volumetrically efficient (FIG. 2A). Also, since the crossovers are symmetrically arranged filament payout in use can be made from the inside of the winding without stressing the filament unduly or producing micro-bending known to reduce optical signal transmission.

For the following description of a second embodiment of the invention reference should be made to FIG, 5B. The primary difference from the first described embodiment is the way in which the guide wires are laid down on the base layer in order to obtain the spaced apart relation necessary for nesting the larger diameter filament winding therebetween. The first or base layer 62 may be formed either by winding left to right or right to left except that the wire ends have to be secured to the mandrel. The second or guide layer is formed by a "bi-filar" technique in which two wires, a large diameter wire 70 and a smaller diameter wire 72, are wound side by side to form the entire layer. Then, the larger diameter wire 70 is removed leaving the smaller diameter wire 72 nested in the base layer and spaced apart to receive the optical fiber 46 in the spaces between the guide wire. The smaller wire then has its ends secured (not shown) and all else remains the same.

Although filaments and base wires of other dimensions may be found advantageous, excellent results were obtained with an optical fiber 46 having a diameter of approximately 0.254 mm (0.010 inches), a base wire 48 of 0.127 mm (0.005 inches), a large diameter wire 70 of 0.152 mm (0.006 inches) and a smaller diameter guide wire 72 of 0.076 mm (0.003 inches).

Although several somewhat preferred embodiments have been disclosed and described in detail herein, it should be understood that this invention is in no sense limited thereby and its scope is to be determined by that of the appended claims.

## Claims

1. A method of forming a filament winding from a filament (46) of a given diameter, comprising the steps of:
providing a mandrel (30) and at least one radially extending flange (32, 34);
wrapping the filament with outermost end turns contacting the flange to form a filament layer; and
reversing such filament wrapping to form additional layers, each having an outermost turn contacting the flange, whereby a filament winding is formed;
characterised by:
winding a base wire (48) to form a first layer onto the mandrel, said base wire having a diameter smaller than said given diameter; and
winding the base wire onto the mandrel over the first layer forming a second guide layer (52) with nested turns spaced apart; and in that
said filament is wrapped over the second base wire layer nesting in the spaces between the turns of the guide layer.

2. A method according to claim 1, further including the steps of:
applying an adhesive to the filament; and
removing the wound filament layers as a unit from the mandrel.

3. A method according to claim 1 or claim 2, in which at least the innermost filament layer is wound separately from the remaining filament layers and is separately removed prior to removing the remaining filament layers from the mandrel.

4. A method according to any one of claims 1 to 3, in which the first and second guide layers are formed from a single continuous base wire, the first layer being wrapped in a first direction and then reversing the wrapping to form the guide layer, and securing the ends of said base wire to the mandrel.

5. A method according to any one of claims 1 to 4, in which the base wire diameter is one-half the winding pitch.

6. A method according to any one of claims 1 to 5, in which a pair of flanges are mounted on the mandrel in spaced apart condition, and the filament layers are wrapped with their outermost end turns contacting the flanges.

7. A method according to any one of claims 1 to 6, in which the turns of the guide layer are spaced apart a full winding pitch.

8. A method of forming a densely packed winding from a filament (46) of given diameter, comprising the steps of:
providing a mandrel with a radially extending flange; and
wrapping a first layer of the filament and forming subsequent layers by reversing the direction of wrapping over the underlying layer, an outermost turn of each layer contacting the flange;
characterised by:
wrapping a base wire on the mandrel to form a first layer (62);
wrapping a second layer over the first layer using first and second guide wires (70, 72) in side-by-side relation; and
removing the second guide wire (70) leaving a space between adjacent turns of the first guide wire; and in that
the first layer of the filament nests in spaces between the first guide wire turns.

9. A method according to claim 8, including the steps of: applying an adhesive to the filament during wrapping, and removing at least the first filament layer and removing the remaining filament layers as a unit from the mandrel.

10. A method according to claim 8 or claim 9, in which the first guide wire is smaller in diameter than the base wire and the second guide wire is larger.

11. A mandrel assembly for use in forming a densely packed filament winding, comprising mandrel means (30) and characterised by:
a layer of base wire (48, 62) wound on the mandrel means with the turns in continuous lateral contact with adjacent turns;
a guide wire layer (52, 72) overlying the base wire layer, each turn of said guide layer being spaced from adjacent turns, the spaces between the guide wires being for nesting receipt of a filament first layer; and
means for securing the guide wire and base wire to the mandrel.

12. A mandrel assembly according to claim 11, in which the base and guide wires (48, 52) are a single continuous piece of wire.

13. A mandrel assembly according to claim 11 or claim 12, in which the guide wire (52, 72) has a smaller diameter than the base wire.

## Patentansprüche

1. Ein Verfahren zum Bilden einer Garnwicklung aus einem Garn (46) eines gegebenen Durchmessers, mit den Schritten:
Bereitstellen eines Wickeldorns (30) und wenigstens eines radial sich erstreckenden Flansches (32, 34);
Wickeln des Garns, wobei die äußersten Endschläge den Flansch kontaktieren, um eine Garnlage zu bilden; und
Umkehren des Garnwickelns, um zusätzliche Lagen zu bilden, von denen jede einen äußersten Schlag hat, der den Flansch kontaktiert, wodurch eine Garnwicklung gebildet wird,
gekennzeichnet durch:
Wickeln eines Basisdrahtes (48) auf den Wickeldorn, um eine erste Lage zu bilden, wobei der Basisdraht einen Durchmesser hat, der kleiner als der gegebene Durchmesser ist; und
Wickeln des Basisdrahtes auf den Wickeldorn über die erste Lage zum Bilden einer zweiten Führungslage (52), mit nestartig aufgenommen, voneinander beabstandeten Schlägen; und wobei
das Garn über die zweite Führungsdrahtlage gewickelt und nestartig in den Abständen zwischen den Schlägen der Führungslage aufgenommen ist.

2. Ein Verfahren nach Anspruch 1, weiterhin mit den Schritten:
Aufbringen eines Klebers auf das Garn; und
Entfernen der gewickelten Garnlagen als Einheit von dem Wickeldorn.

3. Ein Verfahren nach Anspruch 1 oder 2, bei dem wenigstens die innerste Garnlage separat von den verbleibenden Garnlagen gewickelt wird und getrennt vor dem Entfernen der übrigen Garnlagen von dem Wickeldorn entfernt wird.

4. Ein Verfahren nach einem der Ansprüche 1 bis 3, bei dem die ersten und zweiten Führungslagen aus einem einzigen fortlaufenden Basisdraht gebildet werden, wobei die erste Lage in einer ersten Richtung gewickelt wird und dann die Wicklung umgekehrt wird, um die Führungslage zu bilden und wobei die Enden des Basisdrahtes an dem Wickeldorn festgelegt werden.

5. Ein Verfahren nach einem der Ansprüche 1 bis 4, wobei der Durchmesser des Basisdrahtes die Hälfte der Wicklungssteigung beträgt.

6. Ein Verfahren nach einem der Ansprüche 1 bis 5, bei dem ein Paar von Flanschen an dem Wickeldorn im Abstand zueinander angeordnet ist und die Garnlagen so gewickelt werden, daß ihre äußersten Endschläge die Flansche kontaktieren.

7. Ein Verfahren nach einem der Ansprüche 1 bis 6, bei dem die Schläge der Führungslage eine volle Wicklungssteigung voneinander beabstandet sind.

8. Ein Verfahren zum Bilden einer dichtgepackten Wicklung eines Garnes (46) eines gegebenen Durchmessers, mit den Schritten:
Bereitstellen eines Wickeldorns mit einem sich radial erstreckenden Flansch; und
Wickeln einer ersten Lage des Garns und Bilden von nachfolgenden Lagen durch Umkehren der Wickelrichtung über der drunterliegenden Lage, wobei ein äußerster Schlag einer jeden Lage den Flansch kontaktiert;
gekennzeichnet durch:
Wickeln eines Basisdrahtes auf den Wickeldorn, um eine erste Lage (62) zu bilden;
Wickeln einer zweiten Lage über der ersten Lage unter Verwendung erster und zweiter Führungsdrähte (70, 72) in einer Seite-an-Seite-Beziehung; und
Entfernen des zweiten Führungsdrahtes (70) und Zurücklassen eines Freiraumes zwischen benachbarten Schlägen des ersten Führungsdrahtes; wobei
die erste Lage des Garnes nestartig in den Abständen zwischen den Schlägen des ersten Führungsdrahtes aufgenommen ist.

9. Ein Verfahren nach Anspruch 8, mit den Schritten:
Aufbringen eines Klebers auf das Garn während des Wickelns und Entfernen wenigstens der ersten Garnlage und Entfernen der verbleibenden Garnlagen als Einheit von dem Wickeldorn.

10. Ein Verfahren nach Anspruch 8 oder 9, bei dem der erste Führungsdraht in seinem Durchmesser kleiner als der Basisdraht und der zweite Führungsdraht größer ist.

11. Eine Wickeldornanordnung zur Verwendung bei der Herstellung einer dichtgepackten Garnwicklung mit einer Wickeldorneinrichtung (30), gekennzeichnet durch:
eine Lage eines Basisdrahtes (48, 62), welche auf die Wickeldorneinrichtung aufgewickelt ist, wobei die Schläge in fortlaufendem lateralen Kontakt mit benachbarten Schlägen sind;
eine Führungsdrahtlage (52, 72), welche die Basisdrahtlage überdeckt, wobei jeder Schlag der Führungslage von benachbarten Schlägen entfernt ist, wobei die Abstände zwischen den Führungsdrähten zur nestartigen Aufnahme einer ersten Garnlage sind; und
Einrichtungen zum Festlegen des Führungsdrahtes und Basisdrahtes an dem Wickeldorn.

12. Eine Wickeldornanordnung nach Anspruch 11, bei der die Basis- und Führungsdrähte (48, 52) ein einzelnes fortlaufendes Drahtstück sind.

13. Eine Wickeldornanordnung nach Anspruch 11 oder 12, bei der der Führungsdraht (52, 72) einen kleineren Durchmesser als der Basisdraht hat.

## Revendications

1. Procédé pour former un bobinage à partir d'un filament (46) d'un diamètre donné, comportant les étapes qui consistent :
à utiliser un mandrin (30) et au moins un flasque (32, 34) s'étendant radialement ;
à enrouler le filament de manière que les spires extrêmes situées le plus à l'extérieur soient en contact avec le flasque pour former une couche de filament ; et
à inverser cet enroulement du filament pour former d'autres couches ayant chacune une spire située le plus à l'extérieur en contact avec le flasque, afin de former un bobinage de filament ;
caractérisé en ce qu'il consiste :
à bobiner un fil de base (48) pour former une première couche sur le mandrin, ledit fil de base ayant un diamètre inférieur audit diamètre donné ; et
à bobiner le fil de base sur le mandrin pardessus la première couche, formant une deuxième couche (52) de guidage à spires emboîtées et espacées ; et en ce que
ledit filament est enroulé sur la seconde couche du fil de base s'emboîtant dans les espaces entres les spires de la couche de guidage.

2. Procédé selon la revendication 1, comprenant en outre les étapes qui consistent :
à appliquer un adhésif au filament ; et
à retirer les couches de filament bobinés d'un seul bloc du mandrin.

3. Procédé selon la revendication 1 ou la revendication 2, dans lequel au moins la couche de filament située le plus à l'intérieur est bobinée séparément des autres couches de filament et est enlevée séparément avant que les autres couches de filament soient enlevées du mandrin.

4. Procédé selon l'une quelconque des revendications 1 à 3, dans lequel les première et seconde couches de guidage sont formées à partir d'un fil de base continu unique, la première couche étant enroulée dans un premier sens puis l'enroulement étant inversé pour former la couche de guidage, et à assujettir les extrémités dudit fil de base au mandrin.

5. Procédé selon l'une quelconque des revendications 1 à 4, dans lequel le diamètre du fil de base est de la moitié du pas de bobinage.

6. Procédé selon l'une quelconque des revendications 1 à 5, dans lequel deux flasques sont montés sur le mandrin à distance l'un de l'autre, et les couches de filament sont enroulées de manière que leurs spires extrêmes situées le plus à l'extérieur soient en contact avec les flasques.

7. Procédé selon l'une quelconque des revendications 1 à 6, dans lequel les spires de la couche de guidage sont espacées d'un pas complet de bobinage.

8. Procédé pour former un bobinage serré de manière dense à partir d'un filament (46) de diamètre donné, comprenant les étapes qui consistent :
à utiliser un mandrin ayant un flasque s'étendant radialement ; et
à enrouler une première couche du filament et former d'autres couches en inversant le sens d'enroulement sur la couche sous-jacente, une spire située le plus à l'extérieur de chaque couche étant en contact avec le flasque ;
caractérisé en ce qu'il consiste :
à enrouler un fil de base sur le mandrin pour former une première couche (62) ;
à enrouler une seconde couche sur la première couche en utilisant des premier et second fils de guidage (70, 72) dans une disposition côte à côte ; et
à enlever le second fil de guidage (70), laissant un espace entre des spires adjacentes du premier fil de guidage ; et en ce que
la première couche du filament s'emboîte dans des espaces entre les spires du premier fil de guidage.

9. Procédé selon la revendication 8, comprenant les étapes qui consistent :
à appliquer un adhésif au filament durant l'enroulement, et à enlever au moins la première couche de filament et enlever les autres couches de filament d'un seul bloc du mandrin.

10. Procédé selon la revendication 8 ou la revendication 9, dans lequel le premier fil de guidage est d'un diamètre inférieur à celui du fil de base et le second fil de guidage est plus gros.

11. Ensemble à mandrin à utiliser dans la formation d'un bobinage de filament serré de manière dense, comportant un moyen à mandrin (30) et caractérisé par :
une couche de fil de base (48, 62) bobinée sur le moyen à mandrin, les spires étant en contact latéral continu avec des spires adjacentes ;
une couche (52, 72) de fil de guidage recouvrant la couche de fil de base, chaque spire de ladite couche de guidage étant espacée de spires adjacentes, les espaces entre les fils de guidage étant destinés à recevoir par emboîtement une première couche de filament ; et
des moyens pour assujettir le fil de guidage et le fil de base au mandrin.

12. Ensemble à mandrin selon la revendication 11, dans lequel les fils de base et de guidage (48, 52) sont une pièce continue unique de fil.

13. Ensemble à mandrin selon la revendication 11 ou la revendication 12, dans lequel le fil de guidage (52, 72) a un diamètre inférieur à celui du fil de base.
